# EUROPÄISCHE PATENTSCHRIFT

(11) **EP 2 622 367 B1**
(45) Veröffentlichungstag und Bekanntmachung des Hinweises auf die Patenterteilung: **07.09.2016**
(21) Anmeldenummer: 11745690.5
(22) Anmeldetag: 21.07.2011
(51) Int. Cl.: G01S 15/93, G01D 11/30, G01S 13/93

(54) **SENSORHALTERUNG FÜR EINEN ENTFERNUNGSSENSOR**
SENSOR MOUNTING FOR A DISTANCE SENSOR
PORTE-CAPTEUR POUR UN CAPTEUR DE DISTANCE

(30) Priorität: 02.10.2010 DE 102010047403
(43) Veröffentlichungstag der Anmeldung: 07.08.2013
(73) Patentinhaber: WABCO GmbH, 30453 Hannover (DE)
(72) Erfinder: KAUFMANN, Michael, 30989 Gehrden (DE); RISSE, Rainer, 30982 Pattensen-Reden (DE); RONNENBERG, Udo, 30900 Wedemark (DE); STENDER, Axel, 31787 Hameln (DE); STEPHAN, Arne, 31319 Sehnde (DE)
(74) Vertreter: Lauerwald, Jörg
(86) Internationale Anmeldenummer: PCT/EP2011/003657
(87) Internationale Veröffentlichungsnummer: WO 2012/041414

(56) Entgegenhaltungen:
- EP-A1- 0 114 588
- US-A- 3 898 652
- US-A- 5 860 327
- US-A1- 2006 119 473
- US-B1- 6 809 806

## Beschreibung

Die Erfindung betrifft eine Sensorhalterung für einen Entfernungssensor, ein Sensor-System mit der Sensorhalterung und einem Entfernungssensor sowie ein Fahrzeug mit einem derartigen Sensor-System.

Zur Detektion von Entfernungen bzw. Abständen können an einem Fahrzeug unterschiedliche Entfernungssensoren befestigt werden. So sind z. B. Ultraschall- und Radar-Entfernungssensoren bekannt, die innerhalb eines Raumwinkels den Abstand bzw. die Entfernung zu weiteren Objekten detektieren können.

Für z. B. Rückraumüberwachungssysteme und Rampenanfahrsysteme werden derartige Entfernungssensoren am Fahrzeugheck angebracht. Je nach Aufgabe werden die Sensoren in verschiedenen Winkeln zur Längsachse angeordnet, um den erforderlichen Überwachungsbereich mit möglichst wenigen Sensoren abdecken zu können.

Die Entfernungssensoren werden im Allgemeinen durch Sensorhalterungen am Fahrzeug, z. B. an dem Fahrzeugchassis oder der Stoßstange befestigt. Somit sind im Allgemeinen mehrere Sensorhalterungen für die verschiedenen Winkelstellungen der Sensoren erforderlich, z. B. seitliche Sensorhalterungen und ein mittiger Sensorhalter.

Hierdurch erhöhen sich entsprechend die Teilevielfalt bei Fahrzeugherstellern sowie die Kosten für die Werkzeuge zur Herstellung der Sensorhalterungen, wobei die verschiedenen Sensorhalterungen separat zu testen und freizugeben sind.

US 6,809,806 81 offenbart eine Vorrichtung und ein Verfahren zur Messung der Strahlachse eines nach vorne gerichteten Radarsystems eines Fahrzeugs, wobei der Azimuth der Radarantenne mit Hilfe des Befestigungselements verändert werden kann. US 5,860,327 offenbart eine Vorrichtung zur zweidimensionalen Ausrichtung eines Objekts. EP 0 114 588 A1 offenbart eine Vorrichtung zur Positionierung der Ebene eines Vorrichtungstisches zur Erzielung einer optimalen Neigung.

Der Erfindung liegt die Aufgabe zugrunde, eine Sensorhalterung zu schaffen, die am oder im Fahrzeug flexibel bzw. einstellbar anbringbar ist.

Diese Aufgabe wird durch eine Sensorhalterung nach Anspruch 1, ein Sensor-System nach Anspruch 11 sowie ein Fahrzeug mit einem derartigen Sensor-System nach Anspruch 12 gelöst. Die Unteransprüche beschreiben bevorzugte Weiterbildungen.

Erfindungsgemäß ist die Sensorhalterung somit im wesentlichen zweiteilig ausgebildet, mit einem Befestigungsteil zur Befestigung am Fahrzeug, z. B. dem Fahrzeugchassis oder der Stoßstange, und einem den Entfernungssensor aufnehmenden Aufnahmeteil. Das Befestigungsteil kann hierbei ein Gehäuse sein, das den Entfernungssensor umgibt, und das Aufnahmeteil ein das Gehäuse verschließender Deckel, an dem der Entfernungssensor fixiert ist. Somit kann der Deckel mit fixiertem Entfernungssensor in der gewünschten Winkelstellung auf das Gehäuse gesetzt und befestigt werden.

Das Befestigungsteil kann hierbei direkt und oder indirekt am Fahrzeug befestigt werden, z. B. an einer Montageplatte. Das Aufnahmeteil ist erfindungsgemäß in mindestens zwei Winkelstellungen an dem Befestigungsteil befestigbar, wobei die Winkelstellung des Aufnahmeteils die Winkelstellungen des Entfernungssensors definiert.

Somit ist der Entfernungssensor in den unterschiedlichen Winkelstellungen des Aufnahmeteils mit einer unterschiedlichen Ausrichtung seiner Sensorachse aufgenommen. Der Benutzer kann somit durch die Winkelstellung des Aufnahmeteils die Ausrichtung der Sensorachse einstellen.

Die unterschiedlichen Winkelstellungen der Sensorachse können insbesondere in der horizontalen Ebene, d.h. der XY-Ebene des Fahrzeugs liegen.

Gemäß einer bevorzugten Ausbildung kann das Aufnahmeteil an dem Befestigungsteil in genau zwei Winkelstellungen angebracht werden, die zueinander um 180° verdreht sind, wodurch zwei unterschiedliche Ausrichtungen der Sensorachse in der horizontalen Ebene festgelegt werden.

Eine erste Winkelstellung kann hierbei derartig verlaufen, dass die Sensorachse im Wesentlichen in Fahrzeuglängsrichtung (bzw. entgegengesetzt der Fahrzeug-x-Richtung) verläuft.

In dieser Winkelstellung kann die Sensorhalterung z. B. mittig am Fahrzeugheck montiert werden und einen Abstand nach hinten detektieren. In der weiteren Winkelstellung liegt eine Ausrichtung der Sensorachse in der horizontalen Ebene zur Seite hin vor. Je nach Montage der gesamten Sensorhalterung kann diese Ausrichtung nach links oder rechts weisen, so dass insgesamt drei Sensor-Systeme mit Ausrichtungen zur Mitte sowie nach links und rechts angebracht werden können.

Erfindungsgemäß ergeben sich einige Vorteile. So werden die Herstellungskosten deutlich gesenkt, da für die verschiedenen Sensorausrichtungen eine einheitliche Sensorhalterung eingesetzt werden kann.

Die Verstellung kann durch den Benutzer selbst vorgenommen werden. Hierzu kann z. B. eine formschlüssige Arretierung des Befestigungsteils am Aufnahmeteil erfolgen, z. B. mittels Lageraugen bzw. Befestigungsösen, die an den beiden Teilen ausgebildet und durch Befestigungsbolzen miteinander verbunden bzw. fixiert werden. Somit sind eindeutige Positionen für den Benutzer mit relativ wenig Aufwand einstellbar.

Die erfindungsgemäße Sensorhalterung zeichnet sich weiterhin auch durch eine geringe Teileanzahl und Robustheit aus. Grundsätzlich sind nur das Befestigungsteil und das Aufnahmeteil erforderlich, gegebenenfalls mit Arretierungsmitteln wie Befestigungsbolzen oder auch gegebenenfalls einer Dichtung zwischen ihren zur gegenseitigen Anlage dienenden Positionierungsflächen.

Die Erfindung wird im Folgenden anhand der beiliegenden Zeichnungen an einer Ausführungsform erläutert. Es zeigen:

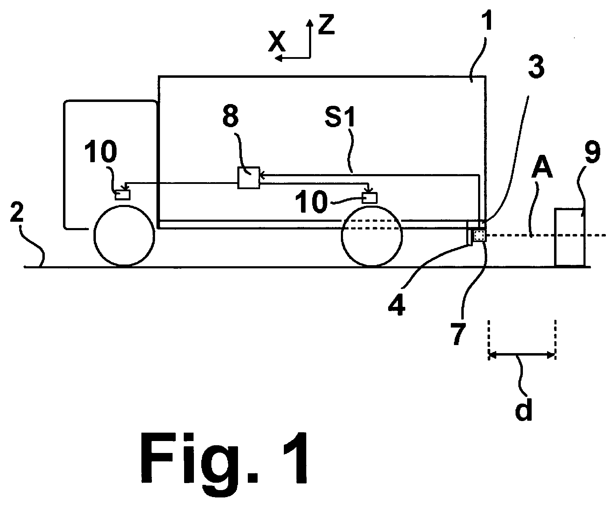

- Fig. 1: ein Fahrzeug mit einem erfindungsgemäßen Sensor-System;
- Fig. 2: die erfindungsgemäße Sensorhalterung in ihrer ersten Winkelstellung;
- Fig. 3: die Sensorhalterung aus Fig. 2 in ihrer zweiten Winkelstellung.

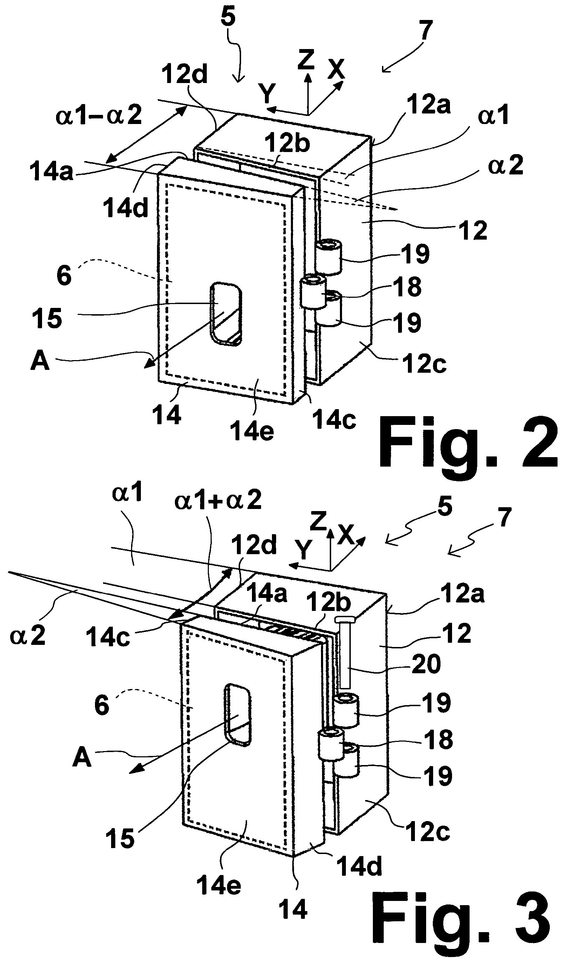

Ein Fahrzeug 1 fährt auf einer Fahrbahn 2. Die Fahrtrichtung des Fahrzeugs 1 wird in üblicher Weise als X, die hierzu vertikale Richtung als Z und die aus Fig. 2, 3 ersichtliche Querrichtung als Y bezeichnet, die zusammen ein Fahrzeugkoordinatensystem bilden. Durch die X-Richtung und die Y-Richtung wird die horizontale Ebene definiert.

An dem Fahrzeug 1, z. B. an seiner Stoßstange 3 bzw. einer an der Stoßstange 3 befestigten Montageplatte 4, ist eine erfindungsgemäße Sensorhalterung 5 mit einem in Fig. 2, 3 gestrichelt eingezeichneten Entfernungssensor 6 befestigt. Die Sensorhalterung 5 mit dem von ihr aufgenommenen Entfernungssensor 6 bilden ein erfindungsgemäßes Sensor-System 7. Eine Anbringung des Sensor-Systems 7 ist nicht nur an der Stoßstange 3 bzw. dem Heckbereich des Fahrzeugs 1, sondern grundsätzlich auch z. B. an den Seiten zur Erfassung eines seitlichen Abstands, oder auch an der Frontseite des Fahrzeugs 1 möglich. Hierbei kann auch eine andere Höhe am Fahrzeug 1 gewählt werden.

Der Entfernungssensor 6 gibt ein Sensorsignal S1 aus, das im Fahrzeug 1 von einer Steuereinrichtung 8 aufgenommen werden kann, um einen Abstand d zu einem Hindernis 9 auszuwerten und z. B. ein Warnsignal bei Unterschreiten eines Mindestabstands auszugeben, sowie gegebenenfalls auch Bremseinrichtungen 10 des Fahrzeugs anzusteuern, falls der Entfernungssensor 6 Teil eines selbständigen Fahrzeug-Bremsregelsystems bzw. Fahrzeug-Fahrdynamikregelsystems ist. Grundsätzlich können die Sensorsignale S1 aber auch bereits innerhalb der Sensorhalterung 5 ausgewertet werden, die dann z. B. ein Warnsignal bei Unterschreiten des Mindestabstands ausgibt.

Die Sensorhalterung 5 ist erfindungsgemäß mehrteilig aufgebaut; gemäß der gezeigten Ausführungsform weist sie zwei Teile auf, nämlich als Befestigungsteil ein Gehäuse 12, das an der chassisseitigen Montageplatte 4 befestigt wird, z. B. mit seiner planen Rückseite 12a, sowie ein Aufnahmeteil, das hier als Deckel 14 ausgebildet ist. Der Entfernungssensor 6 kann z. B. im Wesentlichen quaderförmig ausgebildet sein und ist an dem Deckel 14 befestigt. Hierbei wird der Entfernungssensor 6 in dem Gehäuse 12 aufgenommen und nach hinten durch den Deckel 14 abgedeckt. Im Deckel 14 ist eine Öffnung 15 ausgebildet, durch den die sensitive Fläche des Entfernungssensors 6 einen Erfassungsbereich um die Sensorachse A detektiert.

Das Gehäuse 12 ist mit einer gegenüber der vertikalen YZ-Ebene schrägen bzw. geneigten ersten Positionierungsfläche 12b ausgebildet, die z. B. durch die vier Vorderkanten des Gehäuses 12, d.h. die Kantenflächen seiner beiden Seitenwände und die Kantenflächen der oberen Wand und der unteren Wand gebildet ist. Entsprechend ist an dem Deckel 14 eine zweite Positionierungsfläche 14a ausgebildet, z. B. ebenfalls durch die Kantenflächen seiner horizontalen Ober- und Unterwand sowie seiner Seitenwände 14c und 14d. Auch die zweite Positionierungsfläche 14a ist gegenüber der vertikalen YZ-Ebene versetzt. Die Positionierungsflächen 14a und 12b liegen aneinander, z. B. mit einer Dichtung zwischen ihnen.

Gemäß Fig. 2, 3 ist die erste Positionierungsfläche 12b gegenüber der vertikalen YZ-Ebene um einen ersten Neigungswinkel α1 geneigt, der somit in der horizontalen XY-Ebene liegt. Hierzu kann z. B. die rechte Seitenwand 12c des Gehäuses 12 etwas länger als dessen linke Seitenwand 12d sein.

Entsprechend ist die zweite Positionierungsfläche 14a gegenüber der vertikalen YZ-Ebene um einen zweiten Neigungswinkel α2 geneigt, der somit auch in der horizontalen XY-Ebene liegt, wozu die Seitenwände 14c und 14d des Deckels 14 unterschiedlich lang sein können.

An beiden Seitenwänden 14c und 14d des Deckels 14 ist jeweils ein vertikal durchgängiges Lagerauge (Befestigungsöse) 18 mittig vorgesehen. Entsprechend sind an den Seitenwänden 12c und 12d des Gehäuses 12 jeweils zwei Lageraugen 19 vorgesehen, die bei Anbringung des Deckels 14 am Gehäuse 12 mit dem Lagerauge 18 fluchten, damit an beiden Seiten jeweils ein in Figur 3 schematisch eingezeichneter Befestigungsbolzen 20 durch die Lageraugen 18, 19 gesetzt werden kann, um den Deckel 14 an beiden Seiten mit dem Gehäuse 12 zu verriegeln bzw. arretieren.

Gemäß Fig. 2, 3 kann der Deckel 14 in zwei Positionen an dem Gehäuse 12 befestigt werden, wobei seine Lageraugen (Befestigungsösen) 18 jeweils zwischen den entsprechenden Lageraugen 19 des Gehäuses 12 aufgenommen werden. In der zweiten Positionen der Fig. 3 ist der Deckel 14 gegenüber Fig. 2 um 180° bzgl. der X-Richtung gedreht, d.h. seine Seitenflächen 14c und 14d sind links und rechts vertauscht, wie auch durch die versetzte Position des Lochs 15 zu erkennen ist. In beiden Positionen bzw. Winkelstellungen liegen die Positionierungsflächen 12b und 14a aneinander.

Da der Entfernungssensor 6 am Deckel 14 befestigt ist, wird er mit verdreht. Die Sensorachse A verläuft somit in Figur 2 und 3 unterschiedlich in der XY-Ebene.

Indem die Neigungswinkel α1 = α2 gewählt werden, verläuft in Fig. 2 die Deckelfläche 14e parallel zur Montagefläche bzw. Rückseite 12a des Gehäuses 12. Somit verläuft die Sensorachse A mit dem Winkel α1 - α2 = 0 gegenüber der Fahrzeug-Längsrichtung (- X-Richtung). In der demgegenüber um 180° verdrehten Stellung des Deckels 14 nach Fig. 3 addieren sich die Neigungswinkel α1 und α2 zu einem Gesamtwinkel α1+ α2= 2α1, um den die Sensorachse A in der XY-Ebene gegenüber der X-Richtung verdreht ist.

Grundsätzlich sind auch komplexere Winkelverstellungen als durch die gezeigte einfache Anlage von Positionierungsflächen 12b und 14a möglich. So sind z. B. quadratische Ausbildungen der Sensorhalterung mit 4-zähliger (statt 2-zähliger) Symmetrie möglich.

Erfindungsgemäß können an der Stoßstange 3 z. B. drei Sensor-Systeme 7 montiert werden: in der Mitte der Stoßstange 3 kann z. B. das Sensor-System 7 nach Figur 2 montiert werden, dessen Sensorachse A somit in -X-Richtung nach hinten weist. Seitlich außen, d.h. links und rechts, kann jeweils ein Sensor-System 7 montiert werden, bei dem die Sensorhalterung 5 gemäß Fig. 3 in der horizontalen XY- Ebene nach außen verdreht ist. Das in Fig. 3 gezeigte Sensor-System kann wie gezeigt links montiert werden. Für die Montage an der rechten Seite kann es gegenüber Fig. 3 insgesamt um 180° gedreht werden, so dass die Sensorachse A nach rechts außen weist.

Der Entfernungssensor 6 kann z. B. ein Ultraschallsensor oder Radarsensor sein. Entsprechend seiner Ausbildung kann das Loch 15 gegebenenfalls (bei Ausbildung als Radarsensor) mit einer transparenten Abdeckung verschlossen sein.

## Patentansprüche

1. Sensorhalterung (5) für einen Entfernungssensor (6), wobei die Sensorhalterung (5) mindestens aufweist:
ein Befestigungsteil (12) zur Anbringung an einem Fahrzeug (1),
ein an dem Befestigungsteil (12) verstellbar angebrachtes Aufnahmeteil (14) zur Aufnahme des Entfernungssensors (6),
wobei das Aufnahmeteil (14) an dem Befestigungsteil (12) in mindestens zwei unterschiedlichen Winkelstellungen einstellbar ist, **dadurch gekennzeichnet, dass**
- das Befestigungsteil ein Gehäuse (12) ist, und
- das Aufnahmeteil ein das Gehäuse (12) verschließender Deckel (14) ist, wobei der Entfernungssensor (6) an dem Deckel (14) befestigt und von dem Gehäuse (12) umgeben ist,
wobei der Deckel in den beiden Winkelstellungen um 180° zueinander verdreht ist.

2. Sensorhalterung (5) nach Anspruch 1, **dadurch gekennzeichnet, dass** eine Sensorachse (A) des von dem Aufnahmeteil (14) aufgenommenen Entfernungssensors (6) in den beiden Winkelstellungen des Aufnahmeteils (14) in unterschiedlichen Richtungen verläuft.

3. Sensorhalterung (5) nach Anspruch 2, **dadurch gekennzeichnet, dass** die Sensorachse (A) in den unterschiedlichen Winkelstellungen jeweils in einer horizontalen Ebene (XY) des Fahrzeugs (1) liegt.

4. Sensorhalterung (5) nach Anspruch 2 der 3, **dadurch gekennzeichnet, dass** die Sensorachse (A) in einer ersten Winkelstellung im Wesentlichen parallel zur Fahrzeuglängsrichtung (X) verläuft und in einer zweiten Winkelstellung (α1+ α2) gegenüber der Fahrzeuglängsrichtung (X) versetzt ist.

5. Sensorhalterung (5) nach einem der vorherigen Ansprüche, **dadurch gekennzeichnet, dass** das Befestigungsteil (12) eine erste Positionierungsfläche (12b) und das Aufnahmeteil (14) eine zweite Positionierungsfläche (14a) aufweist, die in den unterschiedlichen Winkelstellungen jeweils direkt aneinander liegen.

6. Sensorhalterung (5) nach einem der Ansprüche 1 bis 4 und nach Anspruch 5, **dadurch gekennzeichnet, dass**
die erste Positionierungsfläche (12b) gegenüber einer vertikalen Ebene (YZ) einen ersten Neigungswinkel (α1) aufweist, und
die zweite Positionierungsfläche (14a) gegenüber der vertikalen Ebene (YZ) einen zweiten Neigungswinkel (α2) aufweist,
der erste und zweite Neigungswinkel (α1, α2) vom Betrag her etwa gleich sind, so dass die Sensorachse (A) des Entfernungssensors (6) in der zweiten Winkelstellung um etwa den doppelten Neigungswinkel (α1 + α2) gegenüber der ersten Winkelstellung verstellt ist.

7. Sensorhalterung (5) nach einem der vorherigen Ansprüche, **dadurch gekennzeichnet, dass** das Aufnahmeteil (14) in den mindestens zwei Winkelstellungen jeweils formschlüssig an dem Befestigungsteil (12) arretierbar ist.

8. Sensorhalterung (5) nach Anspruch 7, **dadurch gekennzeichnet, dass** das Aufnahmeteil (14) und das Befestigungsteil (12) jeweils Lageraugen (18, 19) oder Befestigungsösen aufweisen, die durch Befestigungsbolzen (20) in den jeweiligen Winkelstellungen formschlüssig arretierbar sind.

9. Sensorhalterung (5) nach einem der vorherigen Ansprüche, **dadurch gekennzeichnet, dass** in dem Aufnahmeteil (14) ein Öffnung (15) für den Entfernungssensors (6) zur Erfassung des Außenraums durch die Öffnung (15) ausgebildet ist.

10. Sensorhalterung (5) nach einem der vorherigen Ansprüche, **dadurch gekennzeichnet, dass** sie im wesentlichen quaderförmig ausgebildet ist und das Befestigungsteil (12) und das Aufnahmeteil (14) jeweils Teile der Quaderform bilden, wobei Seitenflächen (12a, 12c, 12d; 14e, 14c, 14d) des Befestigungsteils (12) und des Aufnahmeteils (14) in zumindest einer Winkelstellung im Wesentlichen parallel zueinander oder ineinander übergehend ausgebildet sind.

11. Sensor-System (7), das mindestens aufweist:
eine Sensorhalterung (5) nach einem der vorherigen Ansprüche, und
einen von oder in der Sensorhalterung (5) aufgenommenen Entfernungssensor (6) zur Detektion eines Abstands (d) zu einem Objekt (9).

12. Fahrzeug (1), das mindestens ein Sensor-System (7) nach Anspruch 11 und eine Steuereinrichtung (8) zur Aufnahme der Sensorsignale (S1) des mindestens einen Sensor-Systems (7) aufweist,
wobei das Sensor-System (7) an einer Hinterseite des Fahrzeugs (1) angebracht und im Wesentlichen nach hinten ausgerichtet ist,
wobei das Sensor-System (7) in einer ersten Winkelstellung mit seiner Sensorachse (A) im Wesentlichen nach hinten entgegen zu der Fahrzeuglängsrichtung (X) ausgerichtet und in mindestens einer weiteren Winkelstellung seitlich nach hinten ausgerichtet ist.

13. Fahrzeug (1) nach Anspruch 12, **dadurch gekennzeichnet, dass** es mindestens drei Sensor-Systeme (7) aufweist,
wobei ein mittleres Sensor-System (7) in der ersten Winkelstellung eingestellt ist und ein linkes und ein rechtes Sensor-System (7) jeweils in der zweiten Winkelstellung eingestellt sind,
wobei das mittlere Sensor-System (7) mit seiner Sensorachse (A) nach hinten im wesentlichen entgegengesetzt parallel der Fahrzeug-Längsrichtung (X) ausgerichtet ist,
das linke Sensor-System (7) mit seiner Sensorachse (A) in der horizontalen Ebene (xy) nach links außen ausgerichtet ist,
das rechte Sensor-System (7) mit seiner Sensorachse (A) in der horizontalen Ebene (xy) nach rechts außen ausgerichtet ist,
wobei die Gehäuse (12) des linken Sensor-Systems (7) und des rechten SensorSystems (7) an Montageeinrichtungen (4) des Fahrzeugs (1) in relativ zueinander um 180° verdrehten Positionen befestigt sind.

## Claims

1. Sensor mounting (5) for a distance sensor (6), wherein the sensor mounting (5) at least comprises:
an attachment part (12) for attachment to a vehicle (1),
an accommodating part (14) adjustably attached to the attachment part (12) for accommodating the distance sensor (6),
wherein the accommodating part (14) can be adjusted on the attachment part (12) in at least two different angular positions, **characterized in that**
- the attachment part is a housing (12) and
- the accommodating part is a cover (14) that closes the housing (12),
wherein the distance sensor (6) is attached to the cover (14) and enclosed by the housing (12),
wherein the cover is rotated through 180° in each of the two angular positions relative to the other position.

2. Sensor mounting (5) according to Claim 1, **characterized in that** a sensor axis (A) of the distance sensor (6) accommodated by the accommodating part (14) extends in different directions in the two angular positions of the accommodating part (14).

3. Sensor mounting (5) according to Claim 2, **characterized in that** the sensor axis (A) lies in a horizontal plane (XY) of the vehicle (1) in each of the different angular positions.

4. Sensor mounting (5) according to Claim 2 or 3, **characterized in that** the sensor axis (A) extends in a first angular position essentially parallel to the vehicle's longitudinal direction (X) and in a second angular position (α1+ α2) is offset relative to the vehicle's longitudinal direction (X).

5. Sensor mounting (5) according to any one of the preceding claims, **characterized in that** the attachment part (12) comprises a first positioning surface (12b) and the accommodating part (14) comprises a second positioning surface (14a), which are in direct contact respectively with each other in the different angular positions.

6. Sensor mounting (5) according to any one of the Claims 1 to 4 and according to Claim 5, **characterized in that**
the first positioning surface (12b) has a first inclination angle (α1) relative to a vertical plane (YZ) and the second positioning surface (14a) has a second inclination angle (α2) relative to the vertical plane (YZ),
the first and second inclination angles (α1, α2) are of approximately equal magnitude, so that the sensor axis (A) of the distance sensor (6) in the second angular position is displaced by approximately double the inclination angle (α1 + α2) relative to the first angular position.

7. Sensor mounting (5) according to any one of the preceding claims, **characterized in that** the accommodating part (14) can be positively latched to the attachment part (12) in the at least two angular positions.

8. Sensor mounting (5) according to Claim 7, **characterized in that** the accommodating part (14) and the attachment part (12) each comprise bearing eyes (18, 19) or fixing eyelets, which can be positively locked by fixing bolts (20) in the respective angular positions.

9. Sensor mounting (5) according to any one of the preceding claims, **characterized in that** an opening (15) is formed in the accommodating part (14) for the distance sensor (6) for detecting the exterior through the opening (15).

10. Sensor mounting (5) according to any one of the preceding claims, **characterized in that** it is essentially of rectangular form and the attachment part (12) and the accommodating part (14) each form parts of the rectangular shape, wherein lateral surfaces (12a, 12c, 12d; 14e, 14c, 14d) of the attachment part (12) and the accommodating part (14) are essentially formed parallel to each other or merge together in at least one angular position.

11. Sensor system (7), which comprises at least:
a sensor mounting (5) according to any one of the preceding claims, and a distance sensor (6) accommodated by or in the sensor mounting (5) for the detection of a distance (d) to an object (9).

12. Vehicle (1), which comprises at least one sensor system (7) according to Claim 11 and a controller (8) for receiving the sensor signals (S1) of the at least one sensor system (7),
wherein the sensor system (7) is attached to the rear of the vehicle (1) and is essentially orientated towards the rear,
wherein the sensor system (7) in a first angular position is essentially orientated with its sensor axis (A) towards the rear opposite to the vehicle's longitudinal direction (X) and in at least another angular position is essentially orientated laterally rearwards.

13. Vehicle (1) according to Claim 12, **characterized in that** it comprises at least three sensor systems (7),
wherein a central sensor system (7) is set in the first angular position and a left and a right sensor system (7) are each set in the second angular position,
wherein the central sensor system (7) is orientated with its sensor axis (A) towards the rear essentially opposite and parallel to the vehicle's longitudinal direction (X),
the left sensor system (7) is orientated with its sensor axis (A) in the horizontal plane (xy) outwards to the left,
the right sensor system (7) is orientated with its sensor axis (A) in the horizontal plane (xy) outwards to the right,
wherein the housings (12) of the left sensor system (7) and the right sensor system (7) are attached to mounting devices (4) of the vehicle (1) in positions that are rotated by 180° relative to each other.

## Revendications

1. Porte-capteur (5) pour un capteur distance (6), le porte-capteur (5) comportant au moins :
une pièce de fixation (12) destinée à être montée sur un véhicule (1),
une pièce de logement (14) montée de manière réglable sur la pièce de fixation (12), pour le logement du capteur de distance (6),
la pièce de logement (14) étant réglable sur la pièce de fixation (12) dans au moins deux positions angulaires différentes, **caractérisé en ce que**
- la pièce de fixation est un boîtier (12) et
- la pièce de réception est un couvercle (14) fermant le boîtier (12),
le capteur de distance (6) étant fixé sur le couvercle (14) et étant entouré par le boîtier (12),
le couvercle étant tourné de 180 °l'une par rapport à l'autre dans les deux positions angulaires.

2. Porte-capteur (5) selon la revendication 1,
**caractérisé en ce qu'**un axe de capteur (A) du capteur de distance (6) logé dans la pièce de logement (14) s'étend dans différentes directions dans les deux positions angulaires de la pièce de logement (14).

3. Porte-capteur (5) selon la revendication 2,
**caractérisé en ce que** dans les différentes positions angulaires, l'axe de capteur (A) se situe respectivement dans un plan horizontal (XY) du véhicule (1).

4. Porte-capteur (5) selon la revendication 2 ou la revendication 3, **caractérisé en ce que** dans une première position angulaire, l'axe de capteur (A) s'étend sensiblement à la parallèle de la direction longitudinale (X) du véhicule et dans une deuxième position angulaire (α1 + α2), il est déporté par rapport à la direction longitudinale (X) du véhicule.

5. Porte-capteur (5) selon l'une quelconque des revendications précédentes, **caractérisé en ce que** la pièce de fixation (12) comporte une première surface de positionnement (12b) et la pièce de logement (14) comporte une deuxième surface de positionnement (14a) qui dans les différentes positions angulaires sont chaque fois directement adjacentes l'une à l'autre.

6. Porte-capteur (5) selon l'une quelconque des revendications 1 à 4 et selon la revendication 5, **caractérisé en ce que**
la première surface de positionnement (12b) présente un premier angle d'inclinaison (α1) par rapport à un plan vertical (YZ) et
la deuxième surface de positionnement (14a) présente un deuxième angle d'inclinaison (α2) par rapport au plan vertical (YZ),
le premier et le deuxième angle d'inclinaison (α1, α2) étant d'une valeur approximativement égale, de sorte que dans la deuxième position angulaire, l'axe de capteur (A) du capteur de distance (6) est déplacé d'environ le double angle d'inclinaison (α1 + α2) par rapport à la première position angulaire.

7. Porte-capteur (5) selon l'une quelconque des revendications précédentes, **caractérisé en ce que** la pièce de logement (14) est susceptible d'être bloquée chaque fois par complémentarité de forme sur la pièce de fixation (12) dans les au moins deux positions angulaires.

8. Porte-capteur (5) selon la revendication 7, **caractérisé en ce que** la pièce de logement (14) et la pièce de fixation (12) comportent chacune des oeillets de palier (18, 19) ou des oeillets de fixation qui sont susceptibles d'être bloqués par complémentarité de forme dans les positions angulaires concernées par des boulons de fixation (20).

9. Porte-capteur (5) selon l'une quelconque des revendications précédentes, **caractérisé en ce que** dans la pièce de logement (14) est conçu un orifice (15) pour le capteur de distance (6) pour la détection de l'espace extérieur à travers l'orifice (15).

10. Porte-capteur (5) selon l'une quelconque des revendications précédentes, **caractérisé en ce qu'**il est conçu de forme sensiblement parallélépipédique et **en ce que** la pièce de fixation (12) et la pièce de logement (14) forment respectivement des parties de la forme parallélépipédique, dans au moins une position angulaire, des faces latérales (12a, 12c, 12d ; 14e, 14c, 14d) de la pièce de fixation (12) et de la pièce de logement (14) étant conçues en étant sensiblement parallèles l'une à l'autre ou de manière à passer l'une dans l'autre.

11. Système de capteur (7), qui comporte au moins :
un porte-capteur (5) selon l'une quelconque des revendications précédentes et
un capteur de distance (6) logé sur ou dans le porte-capteur (5) pour la détection d'un écart (d) par rapport à un objet (9).

12. Véhicule (1) qui comporte au moins un système de capteur (7) selon la revendication 11 et un système de commande (8) pour enregistrer les signaux du capteur (S1) de l'au moins un système de capteur (7),
le système de capteur (7) étant monté sur une face arrière du véhicule (1) et orienté sensiblement vers l'arrière,
dans une première position angulaire, par son axe de capteur (A), le système de capteur (7) étant orienté sensiblement vers l'arrière, à l'encontre de la direction longitudinale (X) du véhicule et dans au moins une position angulaire supplémentaire, étant orienté latéralement vers l'arrière.

13. Véhicule (1) selon la revendication 12, **caractérisé en ce qu'**il comporte au moins trois systèmes de capteur (7),
un système de capteur (7) central étant réglé dans la première position angulaire, et un système de capteur (7) de gauche et de droite étant réglés chacun dans la deuxième position angulaire,
avec son axe de capteur (A), le système de capteur (7) central étant orienté vers l'arrière sensiblement à la parallèle opposée de la direction longitudinale (X) du véhicule,
avec son axe de capteur (A), le système de capteur (7) de gauche étant orienté vers la gauche, dans le plan horizontal (xy),
avec son axe de capteur (A), le système de capteur (7) de droite étant orienté vers la droite, dans le plan horizontal (xy),
les boîtiers (12) du système de capteur (7) de gauche et du système de capteur (7) de droite étant fixés sur des dispositifs de montage (4) du véhicule (1) dans des positions tournées de 180° l'une par rapport à l'autre.
